# EUROPÄISCHE PATENTSCHRIFT

(11) **EP 2 938 486 B1**
(45) Veröffentlichungstag und Bekanntmachung des Hinweises auf die Patenterteilung: **20.01.2021**
(21) Anmeldenummer: 13811769.2
(22) Anmeldetag: 19.12.2013
(51) Int. Cl.: B32B 17/10

(54) **VERBUNDGLAS**
COMPOSITE GLASS
VERRE FEUILLETE

(30) Priorität: 27.12.2012 DE 202012012285 U
(43) Veröffentlichungstag der Anmeldung: 04.11.2015
(73) Patentinhaber: SAINT-GOBAIN GLASS FRANCE, 92400 Courbevoie (FR)
(72) Erfinder: SCHWANKHAUS, Norbert, 52499 Baesweiler (DE); HERMENS, Ulrich, 52078 Aachen (DE); GELDERIE, Udo, 52146 Würselen (DE)
(74) Vertreter: Frei Patent Attorneys
(86) Internationale Anmeldenummer: PCT/CH2013/000228
(87) Internationale Veröffentlichungsnummer: WO 2014/100905

(56) Entgegenhaltungen:
- EP-A1- 0 494 548
- DE-A1-102009 044 796
- DE-C1- 19 731 416
- DE-U1-202010 008 729
- JP-A- 2003 012 350
- US-A- 5 061 748

## Beschreibung

Die Erfindung betrifft ein Brandschutzglas, insbesondere ein Brandschutz-Verbundglas.

Verschiedene Brandschutz-Verbundgläser mit angriffshemmenden Schichten sind aus dem Stand der Technik bekannt, bspw. aus WO 2010/091525 oder aus DE 20 2010 008 729U. Solche angriffshemmenden Verbundgläser weisen beispielsweise eine Mehrzahl von Glasplatten sowie zwischen zwei der Glasplatten eine im Brandfall aufschäumende Zwischenschicht und zusätzlich eine Folie aus einem Kunststoff auf, welche bei hohen mechanischen Belastungen - bspw. durch Schläge oder Geschosse - dem Verbund die nötige Festigkeit und/oder Schlagzähigkeit verleihen.

Die Verbundgläser gemäss WO 2010/091525 und gemäss DE 20 2010 008 729U müssen in einem verhältnismässig aufwändigen Autoklavverfahren hergestellt werden. Beim Verbundglas gemäss DE 20 2010 008 729U ist ausserdem auch das Herstellen der im Brandfall aufschäumenden Zwischenschicht ("der Brandschutzschicht") zeitaufwändig.

Es ist Aufgabe der Erfindung, ein Verbundglas zur Verfügung zu stellen, welches Nachteile des Standes der Technik überwindet und welches insbesondere gute Brandschutzeigenschaften und gute angriffshemmende Eigenschaften mit einer rationellen Herstellbarkeit kombiniert.

Diese Aufgabe wird gelöst durch die Erfindung, wie sie in den Schutzansprüchen definiert ist.

Die Angriffsschutz-Schicht ist aus einem geeigneten, insbesondere für diesen Zweck bekannten bei Raumtemperatur festen, transparenten Kunststoff gefertigt, insbesondere aus Polycarbonat oder eventuell PMMA. Aufbauten mit einer Polycarbonat-Lage zwischen zwei Glasscheiben sind bspw. im Stand der Technik als kugelsichere "Glass-Clad Polycarbonate GCP"-Aufbauten bekannt; die Sicherheit gegenüber Geschossen wird von manchen Normen verlangt. Zwischen der Angriffsschutz-Schicht und einer ggf. mit dieser verbundenen Glasscheibe kann wie an sich bekannt eine die Haftung vermittelnde Schicht, bspw. eine Klebefolie auf Polyurethanbasis oder aus einem anderen geeigneten Material vorhanden sein, auch transparente, im flüssigen bzw. viskosen Zustand aufzubringende, aushärtende Kleber sind verwendbar.

Die Brandschutz-Zwischenschicht kann eine aufschäumende/aufblähende Brandschutzschicht sein, zum Beispiel gemäss EP 0 620 781 oder WO 2009/111 897 oder eine durch Trocknen einer Alkalisilikatmasse hergestellte Schicht. Sie kann jedoch auch eine Hydrogel-Brandschutzschicht sein. Im Allgemeinen wird die Zwischenschicht fest und/oder flüssig sein, wobei auch Systeme aus festen und flüssigen Phasen (z.B. disperse Systeme, darunter Gele) und Systeme mit einem nicht klar definierten fest-flüssig-Übergang in Frage kommen.

Die Brandschutz-Zwischenschicht kann insbesondere so ausgebildet sein, dass bei Hitzeeinwirkung unter Brandschutz-Testbedingungen (bspw. bei auf das Verbundglas einwirkenden Temperaturen bei einer Wärmebelastung in Funktion der Zeit gemäss ISO 834-1) aufgrund einer physikalischen Phasenumwandlung (Verdampfung von Wasser oder einem anderen Lösungsmittel, bspw. in kleinen Bläschen bei aufschäumenden Materialien, Verflüssigung eines Feststoffs) und/oder einer chemischen Reaktion, bspw. einer thermischen Zersetzung (Pyrolyse) im Zwischenraum zwischen den Trägerelementen Gas entsteht oder die Gas-Stoffmenge vergrössert wird.

Die Angriffsschutz-Schicht kann zwischen zwei Glasscheiben angeordnet sein, oder eine äussere Oberfläche des Brandschutz-Verbundglases oder eine Oberfläche hin zu einem anderen Element - bspw. einem gasgefüllten Zwischenraum bei einer Ausgestaltung als Isolierglas oder zu einer PVB-Schicht etc. bilden.

Der Begriff "Primer" ist so zu verstehen, dass die Primerschicht eine Adhäsion zwischen der Glasscheibe und der Brandschutz-Zwischenschicht vermittelt, welche auch über lange Zeiten bei Normaltemperaturen - von bspw. maximal 50°C - einer Ablösung des Glases und der Brandschutz-Zwischenschicht voneinander vorbeugt.

Die Primerschicht ist bevorzugt insbesondere an derjenigen Glasscheibe vorhanden, welche auf der dem Feuer zugewandten Seite (sofern diese definiert ist) liegt. Besonders bevorzugt ist die Primerschicht jeweils beidseitig der Brandschutz-Zwischenschicht vorhanden.

Der Ansatz, dass die Primerschicht so ausgebildet ist, dass die Adhäsion unter Bedingungen nachlässt, welche bei einem Brandschutztest herrschen, beruht auf der Erkenntnis, dass bei grosser Erhitzung, welche bei Testbedingungen und auch im Ernstfall herrschen, die dem Feuer zugewandte Glasscheibe bersten kann und sich einzelne Stücke lösen können. Wenn das der Fall ist, soll gesichert sein, dass die Kohäsion innerhalb der Brandschutzschicht grösser ist als die Adhäsion zur der Wärmequelle zugewandten Glasscheibe, so dass keine Lücken in die Brandschutzsschicht gerissen werden, wenn sich Stücke aus der Glasscheibe lösen.

Die Primerschicht ist so ausgestaltet, dass sich ihre Adhäsion an die Brandschutz-Zwischenschicht bei Temperaturen nahe dem Siedepunkt von Wasser, d.h. bei Temperaturen von über ca. 80° oder über ca. 90° signifikant verringert.

Als Materialien für die Primerschicht kommen hydrophobe Substanzen und/oder Substanzen mit einem Erweichungspunkt von bspw. zwischen 80° und 150°, insbesondere zwischen 90° und 120° in Frage.

Bei Brandschutz-Zwischenschichten auf Alkalisilikatbasis kann beispielsweise ein Silan, insbesondere ein organofunktionelles Silan, insbesondere ein Alkylsilan, bspw. ein fluoriertes und/oder chloriertes Alkylsilan als Primer verwendet werden. Alternativ kann die Primerschicht ein Material aus der Gruppe der Wachse, Fettsäuren, Fettsäurederivate, thermoplastischen Lacke, jeweils bevorzugt mit einem Erweichungspunkt bzw. Schmelzpunkt zwischen 70°C oder 80°C und 150 C aufweisen.

Für die vorliegende Verwendung geeignete Primersysteme sind bspw. in WO 99/04970 beschrieben.

Der Randverbund kann zweiteilig sein und einen Abstandhalter (und/oder Kleber) sowie eine Dichtmasse aufweisen. Der Abstandhalter kann bspw. innenseitig und die Dichtmasse aussenseitig vorhanden sein. Als Abstandhalter kommen Kunststoffe wie bspw. Butylpolymere - insbesondere Polyisobutylene - in Frage, auch hybride Aufbauten aus einem metallischen Gerüst und einem Kunststoff kommen in Frage. Als Dichtmasse ist bspw. Polysulfid geeignet; andere Kunststoffe wie z.B. Silikone und Polyurethane mit dichtenden Eigenschaften sind ebenfalls bekannt.

Ebenfalls Gegenstand der Erfindung ist ein Verfahren zum Herstellen eines Brandschutz-Verbundglases der beschriebenen Art.

Nachfolgend werden Ausführungsbeispiele der Erfindung anhand von Figuren eingehender beschrieben. Die Figuren sind schematisch und nicht massstabgetreu. In den Figuren bezeichnen gleiche Bezugszeichen gleiche oder analoge Elemente. Es zeigen:
- Fig. 1-5 je ein Brandschutz-Verbundglas im Querschnitt; und
- Fig. 6 die Herstellung eines Brandschutz-Verbundglases, am Beispiel der Ausführungsform von Fig. 2.

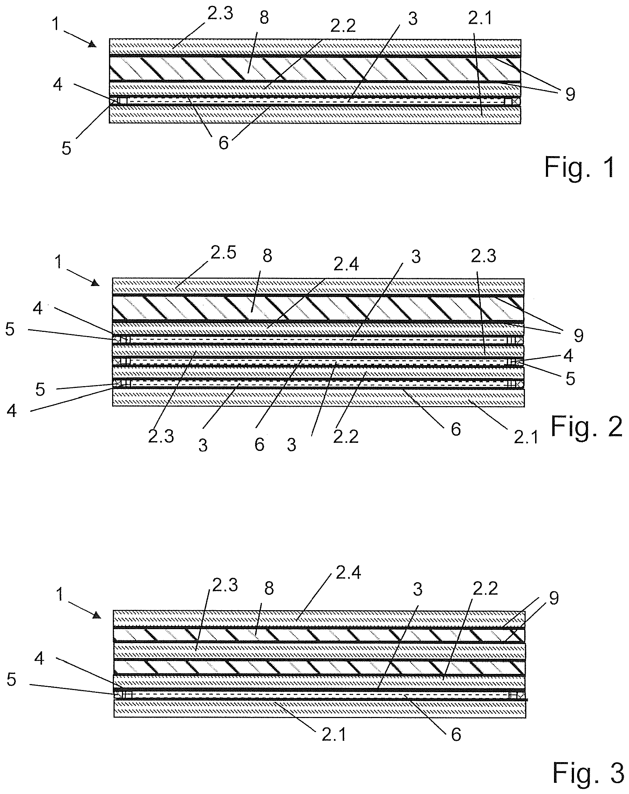

Das Brandschutz-Verbundglas gemäss **Figur 1** weist zwei erste Glasscheiben 2.1, 2.2 und dazwischen eine im Brandfall aufschäumende Zwischenschicht 3 auf, welche zusammen einen Brandschutz-Glasverbund bilden. Entlang der Kanten ist ein umlaufender Randverbund vorhanden, welcher einen Abstandhalter 4 aus einem But-Polymer sowie eine Randabdichtung 5 aus einem Material, welches wirksam die Brandschutz-Zwischenschicht 3 wirksam gegen die Umgebungsluft abdichtet. Als Material für die Randabdichtung kommt bspw. Polysulfid in Frage.

Zwischen den ersten Glasscheiben 2.1, 2.2 und der Brandschutz-Zwischenschicht ist je eine Primerschicht 6 aus einem Polyethylen (PE-)-Wachs (insbesondere ein Hartparaffin oder ein Wachs mit CₙH₂ₙ₊₂-Ketten mit n zwischen 20 und ca. 100) angeordnet.

Weiter weist das Brandschutz-Verbundglas eine weitere Zwischenschicht 8 aus Polycarbonat auf. Diese dient dem Angriffsschutz. Eine weitere Glasscheibe 2.3 schliesst das Verbundglas gegen die in Fig. 1 oben liegende Seite ab.

Zwischen der Polycarbonat-Zwischenschicht 8 (Polycarbonat-Platte) und den an diese angrenzenden Glasscheiben 2.2, 2.3 ist noch je eine Haftschicht 9 vorhanden. Als Haftschicht kann eine in Form einer Folie oder im noch fliessfähigen Zustand aufgebrachte Schicht aus einem thermoplastischen oder aushärtenden Kunststoff dienen, bspw. auf Polyurethan-Basis; es kommen beliebige transparente Kleber in Frage, insbesondere Kleber, die keine Aushärtetemperaturen von über 80°C benötigen und deren Adhäsionswirkung (ggf. nach einem Aushärtungsprozess) bei Raumtemperatur besteht.

Die Glasscheiben 2.1, 2.2, 2.3 können aus thermisch und/oder chemisch vorgespanntem Glas oder auch aus anderen Gläsern, bspw. Floatglas, keramisches Glas etc. bestehen. Kombinationen sind möglich, bspw. indem nur die äusseren Glasscheiben des Verbundglases aus vorgespannten Gläsern bestehen.

Wie an sich bekannt kann der Brandschutz-Glasverbund auch mehr als zwei Glasscheiben mit einer dazwischen angeordneten Brandschutz-Zwischenschicht aufweisen. **Figur 2** illustriert einen Aufbau, der sich von demjenigen der Figur 1 dadurch unterscheidet, dass drei Brandschutz-Zwischenschichten 3 vorhanden sind, mit einer entsprechenden Anzahl von Glasscheiben 2.1-2.5 und Randverbunden 4, 5.

Die Lehre der Erfindung gilt für Aufbauten mit einer beliebigen Anzahl von Brandschutzschichten. Sie gilt auch für Aufbauten, in denen zwischen Brandschutzschichten noch weitere Elemente als bloss die dazwischen liegende Glasscheibe vorhanden sind, bspw. die/mind. eine der weitere(n) Zwischenschicht(en), eine Isolierschicht oder ein anderes Element.

Sowohl in Fig. 1 als auch in Fig. 2 wie auch in den nachfolgend beschriebenen Ausführungsbeispielen ist an jeder Grenzfläche zwischen einer Brandschutz-Zwischenschicht und einer Glasscheibe eine Primerschicht 6 vorhanden. Dies ist keine Notwendigkeit. Vielmehr kann auch - bei einer Mehrzahl von Brandschutzschichten - nur bei einigen Brandschutzschichten eine Primerschicht 6 vorhanden sein und/oder es kann auch nur auf einer Seite der Brandschutzschicht - insbesondere an der Grenzfläche zu derjenigen Glasscheibe, auf deren Seite eher ein Brandausbruch zu erwarten ist - eine Primerschicht vorhanden sein.

**Figur 3** zeigt eine Variante mit zwei Zwischenschichten 8 aus Polycarbonat oder einem andern geeigneten Material; es kann auch eine der Zwischenschichten 8 aus Polycarbonat und die andere aus Acrylglas aufgebaut sein; andere Materialkombinationen sind möglich.

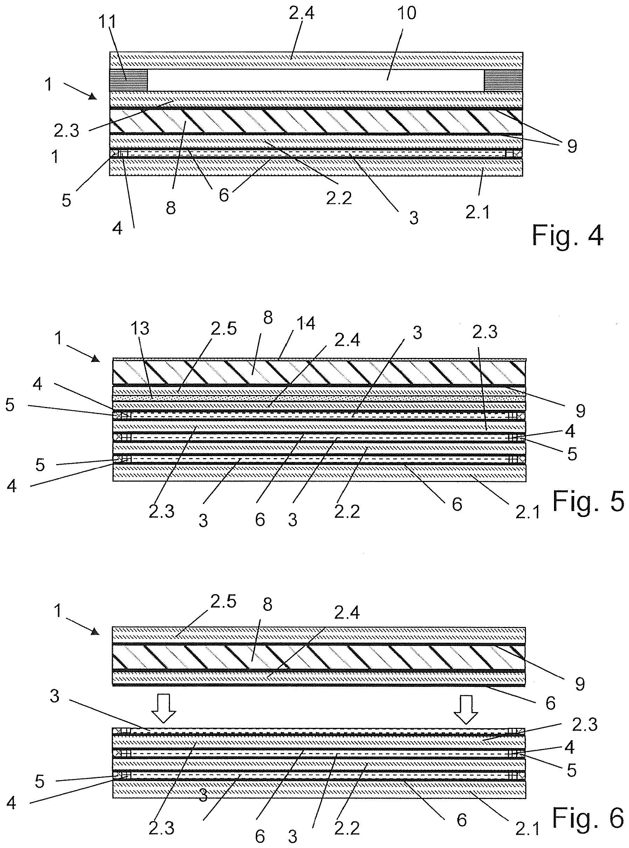

**Figur 4** zeigt eine Ausgestaltung des Brandschutz-Verbundglases als Isolierglas. Das Verbundglas weist zwischen zwei der Glasscheiben 2.3, 2.4 einen bspw. mit einem Edelgas oder einem anderen trockenen Gas gefüllten Leerraum 10 auf. Ein Isolierglas-Randverbund 11 der an sich für Isoliergläser bekannten Art versiegelt den Leerraum 10 hermetisch.

Das Brandschutz-Verbundglas gemäss **Figur 5** weist folgende - unabhängig voneinander implementierbare - Unterschiede zu demjenigen der Figur 2 auf.
- Die Zwischenschicht (Angriffsschutzschicht) 8 aus Polycarbonat oder PMMA ist aussenseitig am Verbund angeordnet. Je nach Gebrauchssituation ist dafür eine eventuelle Kratzfestbeschichtung 14 vorhanden, welche den Verbund zur Seite der Angriffsschutzschicht hin abschliesst.
- Zwischen zwei Glasscheiben 2.4, 2.5 des Brandschutz-Verbundglases ist eine PolyVinylButyral (PVB)-Folie angeordnet. Diese hat wie an sich bekannt eine hohe Reissfestigkeit und bindet im Brand- oder Angriffsfall Glassplitter und hilft damit beim Verhindern eines Totalausfalls.

Die Merkmale der hier beschriebenen Ausführungsformen können ohne Weiteres kombiniert werden:
- Alle Ausführungsformen können mit einer oder mehreren Brandschutz-Zwischenschichten 3 ausgeführt werden.
- Die verschiedenen Ausführungsformen können mit einer oder mehreren Angriffsschutz-Zwischenschichten ausgestaltet sein.
- Die verschiedenen Ausführungsformen können als Isolierglas ausgestaltet sein.
- Die Angriffsschutzschicht(en) kann/können jeweils zwischen zwei Glasscheiben angeordnet sein, oder eine der Angriffsschutzschichten kann aussenliegend angeordnet sein, mit oder ohne Kratzfest-Beschichtung.
- Das Brandschutz-Verbundglas kann eine PVB-Folie aufweisen oder Folie aus einem anderen Material mit vergleichbaren Eigenschaften aufweisen.

Für die Herstellung eines Brandschutz-Verbundglases mit Brandschutz-Zwischenschicht und Angriffsschutz-Schicht, insbesondere der beschriebenen Art, wird beispielsweise ein erster Aufbau als Glas / Polycarbonat/Glas-Verbund (bspw. im Autoklav) gefertigt. Auf eine Scheibe dieses Verbunds wird der Abstandhalter aufgetragen und anschliessend eine Gegenscheibe darauf gelegt (es ist auch möglich, den Abstandhalter auf der Gegenscheibe anstatt auf dem ersten Aufbau anzubringen), worauf aussen mit der Randabdichtung versiegelt wird. Dann wird die Brandschutzmasse durch eine Einfüllöffnung in die dadurch definierte Kammer gefüllt und anschliessend gehärtet. Dies erfolgt bspw. in einem Ofen, bspw. bei Normaldruck und bspw. bei ca. 90°C. Vor dem Aushärten (und vor oder nach dem Befüllen) können ggf. weitere Brandschutz-Zwischenschichten mit Randverbund und Glasscheiben angelegt werden. Anstelle einer einzelnen Gegenscheibe kann an den ersten Aufbau auch ein zweiter Aufbau angelegt werden, welcher bereits mehrere Glasscheiben mit Randverbund und bereits gefüllter oder noch nicht gefüllter Kammer aufweist, wobei auch in diesem Fall der Abstandhalter entweder am ersten Aufbau oder am zweiten Aufbau vorhanden ist.

In den Varianten des Herstellungsverfahrens kann der Schritt des Aufbringens der Randabdichtung auch vor dem Zusammenbringen des ersten Aufbaus und mit der Gegenscheibe bzw. dem zweiten Aufbau erfolgen.

Dadurch, dass in diesem Verfahren der erste Aufbau mit der Angriffsschutzschicht und mindestens einer Glasscheibe fertiggestellt wird, bevor er mit der Brandschutz-Zwischenschicht in Kontakt kommt, muss die Brandschutzsschicht nicht auf Temperaturen erwärmt werden, bei denen sie aufschäumen oder eintrüben könnte. Folglich ist auch kein Autoklavverfahren nötig, durch welches ein solches Aufschäumen/Eintrüben verhindert wird.

## Patentansprüche

1. Brandschutz-Verbundglas (1), mit einer Mehrzahl von Glasscheiben (2.1-2.5) und einer zwischen zwei ersten der Glasscheiben angeordneten Brandschutz-Zwischenschicht (3) mit einer im Brandfall aufschäumenden oder aufquellenden Brandschutzmasse, wobei das Brandschutz-Verbundglas zwischen den ersten Glasscheiben (2.1-2.4) einen entlang der Kanten umlaufenden Randverbund (4, 5) aufweist, derart, dass durch die ersten Glasscheiben und den Randverbund eine durch die Brandschutzmasse gefüllte Kammer definiert ist, und dass zwischen mindestens einer der ersten Glasscheiben (2.1-2.4) und der Brandschutzmasse eine Primerschicht (6) aus einem Material angeordnet ist, dessen Adhäsion an die Brandschutz-Zwischenschicht und/oder an die Glasscheibe sich bei Temperaturen über 80°C im Vergleich zur Raumtemperatur-Bedingungen verringert **dadurch gekennzeichnet, dass** das Brandschutz-Verbundglas (1) eine Angriffsschutz-Schicht (8) aus bei Raumtemperatur festem, transparentem Kunststoff aufweist.

2. Brandschutz-Verbundglas nach Anspruch 1, **dadurch gekennzeichnet, dass** die Angriffsschutz-Schicht (8) aus Polycarbonat oder Polymethylmethacrylat aufgebaut ist.

3. Brandschutz-Verbundglas nach Anspruch 1 oder 2, **dadurch gekennzeichnet, dass** die Primerschicht (6) hydrophob ist.

4. Brandschutz-Verbundglas nach einem der vorangehenden Ansprüche, **dadurch gekennzeichnet, dass** die Primerschicht (6) eine Erweichungstemperatur zwischen 80° C und 150° hat.

5. Brandschutz-Verbundglas nach einem der vorangehenden Ansprüche, **dadurch gekennzeichnet, dass** der Randverbund einen Abstandhalter (4) und eine Dichtmasse (5) aufweist.

6. Brandschutz-Verbundglas nach Anspruch 5, **dadurch gekennzeichnet, dass** die Dichtmasse(5) in Bezug auf den Abstandhalter (4) peripher angeordnet ist.

7. Brandschutz-Verbundglas nach Anspruch 5 oder 6, **dadurch gekennzeichnet, dass** der Abstandhalter (4) ein Butylpolymer als wesentlichen Bestandteil aufweist.

8. Brandschutz-Verbundglas nach einem der Ansprüche 5-7, **dadurch gekennzeichnet, dass** die Dichtmasse (5) ein Polysulfid aufweist.

9. Brandschutz-Verbundglas nach einem der vorangehenden Ansprüche, **gekennzeichnet durch** eine zusätzliche Polyvinylbutyl-Schicht (13).

10. Brandschutz-Verbundglas nach einem der vorangehenden Ansprüche, **dadurch gekennzeichnet, dass** zwischen zweien der Glasscheiben (2.3, 2.4) ein Isolierglas-Randverbund (11) vorhanden ist, welcher mit den zwei Glasscheiben einen gasgefüllten Innenraum (10) definiert, wodurch das Brandschutz-Verbundglas ein Brandschutz-Isolierglas ist.

11. Brandschutz-Verbundglas nach einem der vorangehenden Ansprüche, **gekennzeichnet durch** eine Mehrzahl von durch mindestens eine Glasscheibe voneinander getrennte Brandschutz-Zwischenschichten.

12. Brandschutz-Verbundglas nach einem der vorangehenden Ansprüche, **gekennzeichnet durch** eine Mehrzahl von durch mindestens ein anderes flächiges Element (2.3) voneinander getrennte Angriffsschutz-Schichten (8).

13. Brandschutz-Verbundglas nach einem der vorangehenden Ansprüche, **dadurch gekennzeichnet, dass** die Kunststoff-Zwischenschicht (8) bzw. mindestens eine der Kunststoff-Zwischenschichten zwischen einer der ersten Glasscheiben und einer weiteren Glasscheibe angeordnet ist.

14. Brandschutz-Verbundglas nach einem der vorangehenden Ansprüche, **dadurch gekennzeichnet, dass** mindestens eine der Glasscheiben (2.1-2.5) und beispielsweise alle Glasscheiben aus vorgespanntem Glas bestehen.

15. Verfahren zum Herstellen eines Brandschutz-Verbundglases mit einer Mehrzahl von Glasscheiben (2.1-2.5) und einer zwischen zwei ersten der Glasscheiben angeordneten Brandschutz-Zwischenschicht (3) mit einer im Brandfall aufschäumenden oder aufquellenden Brandschutzmasse, sowie einer Angriffsschutz-Schicht (8) aus bei Raumtemperatur festem, transparentem Kunststoff, wobei das Verfahren folgende Schritte aufweist:
Fertigen eines Aufbaus als Verbund einer Glasscheibe mit einer Angriffsschutz-Schicht (8) und einer weiteren Glasscheibe
Anbringen eines entlang der Kante umlaufenden Randverbunds (4, 5) und einer weiteren Glasscheibe an eine Flachseite des Aufbaus,
Füllen eines Hohlraums zwischen dem Aufbau, der weiteren Glasscheibe und dem Randverbund mit einer Brandschutzmasse, und
Aushärten der Brandschutzmasse,
wobei mindestens eine der Glasscheiben vor dem Befüllen des Hohlraums mit einer Primerschicht (6) aus einem Material versehen wird, dessen Adhäsion an die Brandschutz-Zwischenschicht und/oder an die Glasscheibe sich bei Temperaturen über 80°C im Vergleich zur Raumtemperatur-Bedingungen verringert.

## Claims

1. A fire-resistant composite glass (1), with a plurality of glass panes (2.1-2.5) and with a fire-resistant intermediate layer (3) which is arranged between two first ones of the glass panes and which is with a fire-resistant mass foaming or swelling in the case of fire, wherein the fire-resistant composite glass between the first glass panes (2.1-2.4) comprises an edge composite (4, 5) which is peripheral along the edges, in a manner such that a chamber filled by the fire-resistant mass is defined by the first glass planes and the edge composite, and that a primer layer (6) of a material whose adhesion to the fire-resistant intermediate layer and/or to the glass pane reduces in comparison to room temperature conditions at a temperatures above 80°C, is arranged between at least one of the first glass panes (2.1-2.4) and the fire-resistant mass; **characterised in that**
the fire-resistant composite glass (1) comprises an attack-resistant layer (8) of transparent plastic which is solid at room temperature.

2. A fire-resistant composite glass according to claim 1, **characterised in that** the attack-resistant layer (8) is constructed of polycarbonate or polymethyl methacrylate.

3. A fire-resistant composite glass according to claim 1 or 2, **characterised in that** the primer layer (6) is hydrophobic.

4. A fire-resistant composite glass according to one of the preceding claims, **characterised in that** the primer layer (6) has a softening temperature between 80°C and 150°C.

5. A fire-resistant composite glass according to one of the preceding claims, **characterised in that** the edge composite comprises a spacer (4) and a sealing mass (5).

6. A fire-resistant composite glass according to claim 5, **characterised in that** the sealing mass (5) is arranged peripherally with respect to the spacer (4).

7. A fire-resistant composite glass according to claim 5 or 6, **characterised in that** the spacer (4) comprises a butyl polymer as an essential constituent.

8. A fire-resistant composite glass according to one of the claims 5-7, **characterised in that** the sealing mass (5) comprises a polysulphide.

9. A fire-resistant composite glass according to one of the preceding claims, **characterised by** an additional polyvinylbutyl layer (13).

10. A fire-resistant composite glass according to one of the preceding claims, **characterised in that** an insulation glass edge composite (11) is present between two of the glass panes (2.3, 2.4), said insulation glass edge composite with the two glass panes defining a gas-filled interior (10), by which means the fire-resistant composite glass is a fire-resistant insulation glass.

11. A fire-resistant composite glass according to one of the preceding claims, **characterised by** a plurality of fire-resistant intermediate layers which are separated from one another by way of at least one glass pane.

12. A fire-resistant composite glass according to one of the preceding claims, **characterised by** a plurality of attack-resistant layers (8) which are separated from one another by at least one other sheet-like element (2.3)

13. A fire-resistant composite glass according to one of the preceding claims, **characterised in that** the plastic intermediate layer (8) or at least one of the plastic intermediate layers is arranged between one of the first glass panes and a further glass pane.

14. A fire-resistant composite glass according to one of the preceding claims, **characterised in that** at least one of the glass panes (2.1-2.5) and for example all glass panes consist of prestressed glass.

15. A method for manufacturing a fire-resistant composite glass with a plurality of glass panes (2.1-2.5) and with a fire-resistant intermediate layer (3) which is arranged between two first ones of the glass panes and which is with a fire-resistant mass which foams or swells in the case of fire, as well as with a attack-resistant layer (8) of transparent plastic which is solid at room temperature, wherein the method comprises the following steps:
manufacturing a construction as a composite of a glass pane with an attack-resistant layer (8) and a further glass pane,
attaching an edge composite (4, 5) which is peripheral along the edge, and a further glass pane, onto a flat side of the construction,
filling a cavity between the construction, the further glass pane and the edge composite with a fire-resistant mass and
curing the fire-resistant mass,
wherein at least one of the glass panes before the filling of the cavity is provided with a primer layer (6) of a material whose adhesion to the fire-resistant intermediate layer and/or to the glass pane reduces in comparison to room temperature conditions at a temperature above 80°C.

## Revendications

1. Vitrage feuilleté anti-feu (1) présentant plusieurs feuilles de verre (2.1-2.5) et, disposée entre deux premières feuilles de verre, une couche intermédiaire anti-feu (3) présentant une pâte anti-feu apte à mousser ou à gonfler,
le vitrage feuilleté anti-feu présentant entre les deux premières feuilles de verre (2.1-2.4) un ensemble de bordure (4, 5) s'étendant le long de la périphérie des bords de telle sorte
qu'une chambre remplie par la pâte anti-feu soit définie par les premières feuilles de verre et l'ensemble de bordure et
qu'entre au moins l'une des deux premières feuilles de verre (2.1-2.4) et la pâte anti-feu soit disposée une couche de fond (6) en un matériau dont l'adhérence à la couche intermédiaire anti-feu et/ou à la feuille de verre diminue lorsque sont atteintes des températures de 80°C par comparaison avec la température ambiante,
**caractérisé en ce que**
le vitrage feuilleté anti-feu (1) présente une couche (8) de protection contre les attaques en matière synthétique transparente et solide à température ambiante.

2. Vitrage feuilleté anti-feu selon la revendication 1, **caractérisé en ce que** la couche (8) de protection contre les attaques est constituée de polycarbonate ou de poly(méthacrylate de méthyle).

3. Vitrage feuilleté anti-feu selon les revendications 1 ou 2, **caractérisé en ce que** la couche de fond (6) est hydrophobe.

4. Vitrage feuilleté anti-feu selon l'une des revendications précédentes, **caractérisé en ce que** la température d'amollissement de la couche de fond (6) est comprise entre 80° C et 150° C.

5. Vitrage feuilleté anti-feu selon l'une des revendications précédentes, **caractérisé en ce que** l'ensemble de bordure présente un écarteur (4) et une pâte d'étanchéité (5).

6. Vitrage feuilleté anti-feu selon la revendication 5, **caractérisé en ce que** la pâte d'étanchéité (5) est disposée à la périphérie de l'écarteur (4).

7. Vitrage feuilleté anti-feu selon les revendications 5 ou 6, **caractérisé en ce que** l'écarteur (4) possède comme composant essentiel un polymère de butyle.

8. Vitrage feuilleté anti-feu selon l'une des revendications 5 à 7, **caractérisé en ce que** la pâte d'étanchéité (5) présente un polysulfure.

9. Vitrage feuilleté anti-feu selon l'une des revendications précédentes, **caractérisé par** une couche supplémentaire (13) de poly(vinylbutyle).

10. Vitrage feuilleté anti-feu selon l'une des revendications précédentes, **caractérisé en ce qu'**entre deux des feuilles de verre (2.3, 2.4) est prévu un ensemble de bordure (11) en verre isolant, qui définit avec les deux feuilles de verre un espace intérieur (10) rempli de gaz qui fait du vitrage feuilleté anti-feu un vitrage anti-feu isolant.

11. Vitrage feuilleté anti-feu selon l'une des revendications précédentes, **caractérisé par** plusieurs couches intermédiaires anti-feu séparées les unes des autres par au moins une feuille de verre.

12. Vitrage feuilleté anti-feu selon l'une des revendications précédentes, **caractérisé par** plusieurs couches (8) de protection contre les attaques séparées les unes des autres par au moins un autre élément plat (2.3) .

13. Vitrage feuilleté anti-feu selon l'une des revendications précédentes, **caractérisé en ce que** la couche (8) de protection contre les attaques en matière synthétique ou au moins l'une des couches (8) de protection contre les attaques en matière synthétique sont disposées entre l'une des premières feuilles de verre et une autre feuille de verre.

14. Vitrage feuilleté anti-feu selon l'une des revendications précédentes, **caractérisé en ce qu'**au moins l'une des feuilles de verre (2.1-2.5) et par exemple toutes les feuilles de verre sont formées de verre trempé.

15. Procédé de fabrication d'un vitrage feuilleté anti-feu présentant plusieurs feuilles de verre (2.1-2.5) et, disposée entre deux premières feuilles de verre, une couche intermédiaire anti-feu (3) présentant une pâte anti-feu apte à mousser ou à gonfler, ainsi qu'une couche (8) de protection contre les attaques en matière synthétique transparente et solide à température ambiante, le procédé comprenant les étapes ci-dessous :
préparation d'un composite constitué d'une feuille de verre présentant une couche (8) de protection contre les attaques et d'une autre feuille de verre,
placement d'un ensemble de bordure (4, 5) et d'une autre feuille de verre sur un côté plat du composite,
remplissage de la cavité entourée par le composite l'autre feuille de verre et l'ensemble de bordure par une pâte anti-feu et
durcissement de la pâte anti-feu,
au moins l'une des feuilles de verre étant avant le remplissage de la cavité dotée d'une couche de fond (6) en un matériau dont l'adhérence à la couche intermédiaire anti-feu et/ou à la feuille de verre diminue lorsque sont atteintes des températures de 80°C par comparaison avec la température ambiante.
